# EUROPEAN PATENT APPLICATION

(11) **EP 4 636 284 A1**
(43) Date of publication of application: **22.10.2025**
(21) Application number: 23903558.7
(22) Date of filing: 14.12.2023
(51) Int. Cl.: F16J 15/18, F16J 15/324, F16J 15/3272

(54) **SEAL RING**

(30) Priority: 16.12.2022 JP 2022201393
(71) Applicant: NOK Corporation, Minato-ku Tokyo 105-8585 (JP)
(72) Inventor: SATO Takumi, Kitaibaraki-shi, Ibaraki 319-1535 (JP); YOSHIDA Yusuke, Kitaibaraki-shi, Ibaraki 319-1535 (JP)
(74) Representative: Global IP Europe Patentanwaltskanzlei
(86) International application number: PCT/JP2023/044780
(87) International publication number: WO 2024/128274

(57) **Abstract**

A seal ring having an annular shape and having one cut portion (2) includes: a pair of decreasing portions (5 and 6) in which a radial-direction dimension of the seal ring (1) decreases as the seal ring (1) approaches the cut portion (2); and a plurality of recessed parts (7) which are formed in at least one of end surfaces (1C and 1D) directed in an axis line (x) direction. The plurality of recessed parts (7) are configured with a first recessed part (7A) arranged in a range included in the decreasing portions (5 and 6) and a second recessed part (7B) arranged in a range spaced apart from the cut portion (2) with respect to the first recessed part (7A). Between an inner peripheral surface (1A) of the seal ring (1) and the second recessed part (7B), an inner periphery side wall part (9B) which demarcates both of those and a communication portion (91) which causes both of those to communicate with each other are formed. Between the inner peripheral surface (1A) of the seal ring (1) and the first recessed part (7A), an enlarged communication portion (74) is formed which causes both of those to communicate with each other. The enlarged communication portion (74) is formed with one portion, and a circumferential-direction dimension of the enlarged communication portion (74) is larger than a circumferential-direction dimension of the communication portion (91).

## Description

### Technical Field

The present invention relates to a seal ring.

### Background Art

In general, as a seal ring that is arranged between an outer periphery side member and an inner periphery side member which rotate relatively, a seal ring has been known in which both end portions of long-length members are connected together and which is thereby formed into an annular shape. As such a seal ring, a seal ring has been suggested which is formed such that a thickness in a radial direction gradually decreases toward a joining portion (for example, see Patent Literature 1). In the seal ring disclosed in Patent Literature **1,** the thickness (radial-direction dimension) is decreased as described above, an outer peripheral surface or an inner peripheral surface of the seal ring thereby becomes likely to approximate a perfect-circular column shape in a case where the seal ring is arranged to contact a circular-column-shaped inner peripheral surface of an outer side member or a circular-column-shaped outer peripheral surface of an inner side member, and by making small a gap between the seal ring and the outer side member or the inner side member, sealing performance is intended to be improved.

### Citation List

### Patent Literature

Patent Literature 1: International Publication No. WO 2021/010005

### Summary of Invention

### Technical Problem

As in the seal ring disclosed in Patent Literature 1, when a radial-direction dimension is decreased as described above, in positions closer to portions where both end portions of long-length members are connected together, rigidity becomes lower, deformation occurs more easily, and it is easier to cause the seal ring to approximate a perfect-circular column shape. Further, in the seal ring disclosed in Patent Literature 1, a groove is formed in an end surface on an atmospheric space side. A dynamic pressure action is caused by forming such a groove, an oil film is formed between this end surface and a wall surface of a peripheral groove in which the seal ring is provided, and reduction in torque to be exerted on a shaft (hereinafter, simply referred to as "torque") is intended to be reduced.

In a case where the groove is formed in the end surface of the seal ring in such a manner, in order to inhibit oil from passing through the groove while crossing it in a radial direction and from leaking out from a sealing target space to an atmospheric space, it is necessary to provide a wall part having a certain or greater width in a position neighboring the groove in the radial direction. In a configuration in which a thickness of the seal ring itself is decreased in the radial direction, when a wall part is provided while the above-described groove is formed, a groove width in the radial direction also becomes smaller toward a joining portion. In this case, a magnitude of the above dynamic pressure action is proportional to an area of the oil film to be formed. When a radial-direction dimension of the groove is small, because the area of the oil film to be formed by the groove becomes small and the dynamic pressure action to be obtained becomes small, it might become difficult to reduce the torque. That is, it has been difficult to achieve both of an improvement in sealing performance by decreasing the radial-direction dimension of the seal ring and reduction in the torque by causing the dynamic pressure action by the groove.

The present invention has been made in consideration of the above problems, and an object thereof is to provide a seal ring that can reduce torque while improving sealing performance.

### Solution to Problem

To achieve the above object, a seal ring according to the present invention is a seal ring having an annular shape and having one cut portion, the seal ring including: a pair of decreasing portions in which a radial-direction dimension of the seal ring decreases as the seal ring approaches the cut portion; and a plurality of recessed parts which are formed in at least one of surfaces directed in an axis line direction, in which the plurality of recessed parts are configured with a first recessed part arranged in a range included in the decreasing portions and a second recessed part arranged in a range spaced apart from the cut portion with respect to the first recessed part, between an inner peripheral surface or an outer peripheral surface of the seal ring and the second recessed part, a wall part, which demarcates both of the inner peripheral surface or the outer peripheral surface and the second recessed part, and a communication portion, which causes both of the inner peripheral surface or the outer peripheral surface and the second recessed part to communicate with each other, are formed, between the inner peripheral surface or the outer peripheral surface of the seal ring and the first recessed part, an enlarged communication portion is formed which causes both of the inner peripheral surface or the outer peripheral surface and the first recessed part to communicate with each other, the enlarged communication portion is formed with one or a plurality of portions, and a total circumferential-direction dimension of the enlarged communication portion is greater than a circumferential-direction dimension of the communication portion.

In the seal ring according to one aspect of the present invention, the enlarged communication portion causes the whole first recessed part to communicate with the inner peripheral surface or the outer peripheral surface.

In the seal ring according to one aspect of the present invention, the plurality of recessed parts are formed in both surfaces, which are directed in the axis line direction, in the seal ring.

### Advantageous Effects of Invention

A seal ring according to the present invention can reduce torque while improving sealing performance.

### Brief Description of Drawings

[Fig. 1] Fig. 1 is a cross-sectional view of a sealing structure in which a seal ring according to an embodiment of the present invention is provided.
[Fig. 2] Fig. 2 is a plan view of the seal ring according to the embodiment of the present invention.
[Fig. 3] Fig. 3 is a perspective view of the seal ring according to the embodiment of the present invention.
[Fig. 4] Fig. 4 is a perspective view of the seal ring according to the embodiment of the present invention.
[Fig. 5] Fig. 5 is a cross-sectional view along line B-B in Fig. **4****.**
[Fig. 6] Fig. 6 is an enlarged plan view schematically illustrating the seal ring according to the embodiment of the present invention.
[Fig. 7] Fig. 7 is a cross-sectional view along line A-A in Fig. **2****.**
[Fig. 8] Fig. 8 is a cross-sectional view of a seal ring of a variant 1 of the present invention.
[Fig. 9] Fig. 9 is a cross-sectional view of a seal ring of a variant 2 of the present invention.
[Fig. 10] Fig. 10 is a cross-sectional view of a seal ring of a variant 3 of the present invention.
[Fig. 11] Fig. 11 is a cross-sectional view of a seal ring of a variant 4 of the present invention.
[Fig. 12] Fig. 12 is a cross-sectional view of a seal ring of a variant 5 of the present invention.
[Fig. 13] Fig. 13 is a cross-sectional view of a seal ring of a variant 6 of the present invention.
[Fig. 14] Fig. 14 is a cross-sectional view of a seal ring of a variant 7 of the present invention.

### Description of Embodiments

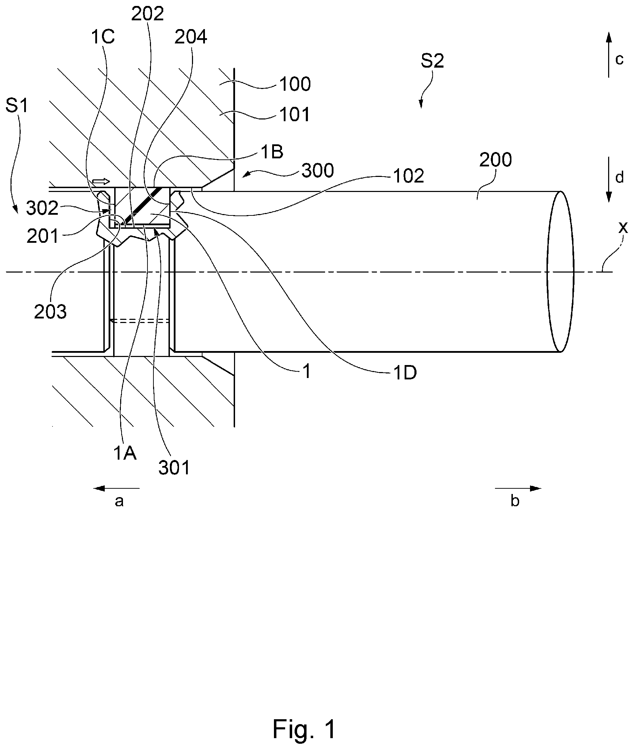

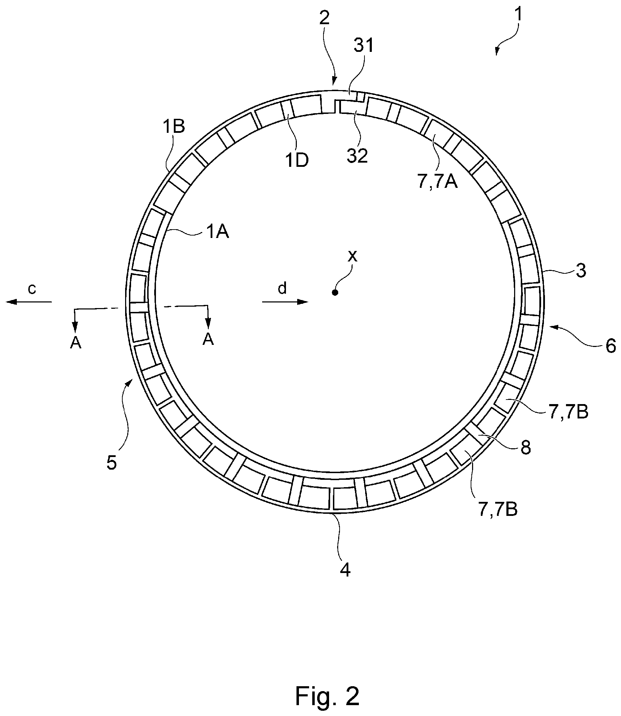

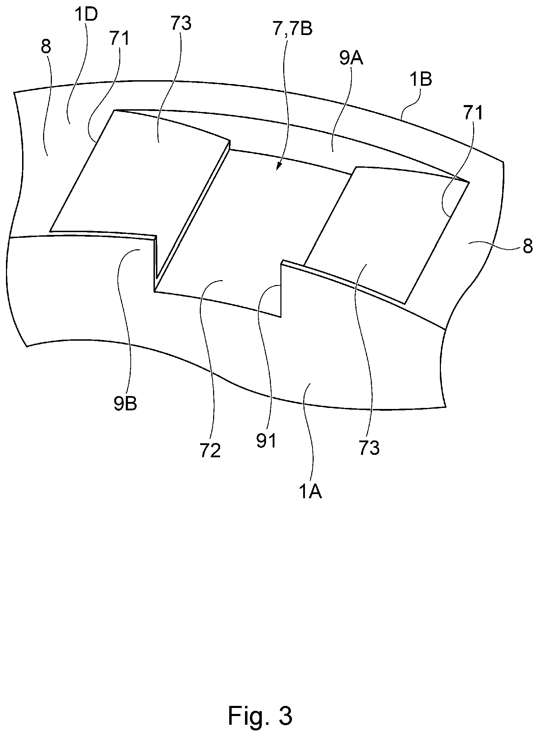

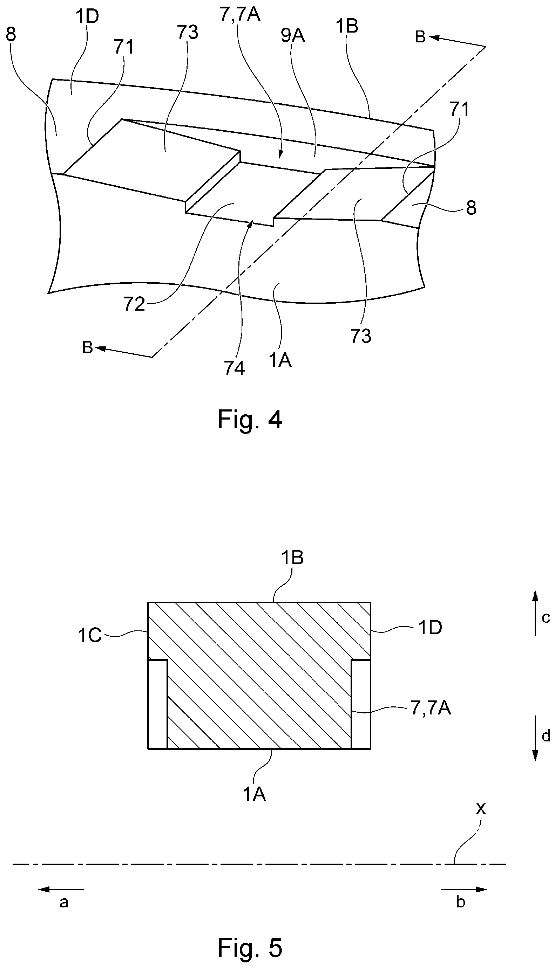

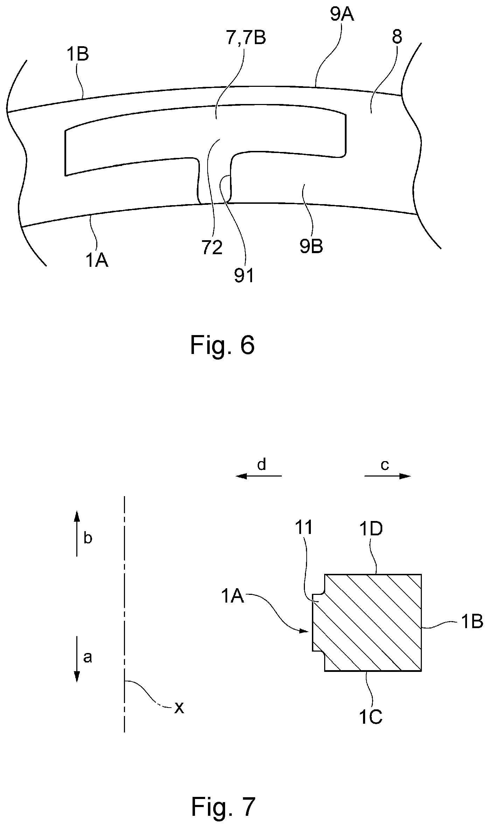

Embodiments of the present invention will hereinafter be described in detail with reference to drawings. Fig. 1 is a cross-sectional view of a sealing structure 300 in which a seal ring 1 according to the embodiment of the present invention is provided, Fig. 2 is a plan view of the seal ring 1, Fig. 3 is a perspective view of the seal ring 1, Fig. 4 is a perspective view of the seal ring 1, Fig. 5 is a cross-sectional view along line B-B in Fig. 4, Fig. 6 is an enlarged plan view schematically illustrating the seal ring 1, and Fig. 7 is a cross-sectional view along line A-A in Fig. 2.

As illustrated in Figs. 1 to 7, the seal ring 1 according to the embodiment of the present invention is an annular seal ring having one cut portion 2 and includes a pair of decreasing portions 5 and 6 in which a radial-direction dimension of the seal ring 1 decreases as the seal ring 1 approaches the cut portion 2, and a plurality of recessed parts 7 which are formed in at least one of end surfaces 1C and 1D directed in an axis line x direction. The plurality of recessed parts 7 are configured with a first recessed part 7A arranged in a range included in the decreasing portions 5 and 6 and a second recessed part 7B arranged in a range spaced apart from the cut portion 2 with respect to the first recessed part 7A. Between an inner peripheral surface 1A of the seal ring 1 and the second recessed part 7B, an inner periphery side wall part 9B which demarcates both of those and a communication portion 91 which causes both of those to communicate with each other are formed. Between the inner peripheral surface 1A of the seal ring 1 and the first recessed part 7A, an enlarged communication portion 74 is formed which causes both of those to communicate with each other. The enlarged communication portion 74 is formed with one portion, and a circumferential-direction dimension of the enlarged communication portion 74 is larger than a circumferential-direction dimension of the communication portion 91.

The seal ring 1 forms the sealing structure 300, and in the present embodiment, the sealing structure 300 is a structure for sealing a ring-shaped gap between a power transmission shaft member and a housing in a vehicle. Note that the sealing structure formed with the seal ring 1 is not limited to the above structure, it is sufficient that the structure is a structure for sealing a fluid such as lubricating oil or cooling water in various kinds of oil hydraulic apparatuses, water hydraulic apparatuses, and pneumatic apparatuses, and examples of specific apparatuses to be targets include an engine, a motor, a generator, a pump, a compressor, power steering for a vehicle, a speed reducer, a transmission, and a cooling apparatus.

The seal ring 1 is arranged between a housing 100 as an outer periphery side member and a shaft portion 200 as an inner periphery side member and thereby forms the sealing structure 300. The housing 100 forms, on its inner side, a lubricating oil space S1 as a sealing target space and has a wall part 101 which demarcates the lubricating oil space S1 and an external space (atmosphere) S2. In the wall part 101, a cylindrical through hole 102 is formed.

The shaft portion 200 is a power transmission shaft member of a vehicle, which rotates around an axis line x, is formed into a rod shape having a circular cross section, and is inserted through the through hole 102. An outer diameter of the shaft portion 200 is smaller than an inner diameter of the through hole 102. In a region in an outer peripheral surface of the shaft portion 200, which is opposed to an inner peripheral surface of the through hole 102, throughout a whole periphery, a recess-shaped peripheral groove 201 is formed. The seal ring 1 is arranged in the peripheral groove 201, is thereby arranged in the through hole 102, contacts both of the through hole 102 and the shaft portion 200, and seals a gap between the housing 100 and the shaft portion 200. Accordingly, the seal ring 1 inhibits lubricating oil as a sealing target object from leaking out from the lubricating oil space S1 to the external space S2.

Hereinafter, for convenience of description, in a direction of the axis line x as a rotation axis passing through a center of the shaft portion 200, an arrow a (see Figs. 1 and 2) direction (a direction toward the lubricating oil space S1) is set as one side, and in the axis line x direction, an arrow b (see Figs. 1 and 2) direction (a direction toward the external space S2) is set as another side. Further, in a direction perpendicular to the axis line x (hereinafter, also referred to as a "radial direction"), a direction moving away from the axis line x (arrow c direction in Fig. 1) is set as an outer periphery side, and a direction moving close to the axis line x (arrow d direction in Fig. 1) is set as an inner periphery side.

The shaft portion 200 rotates with respect to the fixed housing 100, whereby these parts rotate relatively. In this case, the seal ring 1 does not rotate with respect to the housing 100 and slides with respect to the shaft portion 200. That is, the seal ring 1 slidably contacts the shaft portion 200. Note that the seal ring 1 may rotate together with the shaft portion 200 to some extent.

The seal ring 1 is formed into an annular shape with a long-length elastic body. It is sufficient that a material of the elastic body forming the seal ring 1 is a resin material such as polyether ether ketone (PEEK), polyphenylene sulfide (PPS), or polytetrafluoroethylene (PTFE), for example, and while those materials are used as base polymers, a filling material or the like may be added for the purpose of improving sliding characteristics or strength.

The annular seal ring 1 has the inner peripheral surface 1A, an outer peripheral surface 1B, the end surface 1C on one side in the axis line x direction, and the end surface 1D on the other side in the axis line x direction. The seal ring 1 has one cut portion 2 and is formed into the annular shape. That is, the seal ring 1 has such a shape that both end portions 31 and 32 of a long-length circular-arc portion 3 are capable of contacting each other by elastic deformation. Both of the end portions 31 and 32 have appropriate shapes such as a special step cut, a step cut, a straight cut, and a bias cut and are connected with each other.

The seal ring 1 is provided in the sealing structure 300 such that the outer peripheral surface 1B is tightly fitted on the inner peripheral surface of the through hole 102. On the other hand, between the inner peripheral surface 1A of the seal ring 1 and a bottom surface 202 of the peripheral groove 201 of the shaft portion 200, a gap 301 is formed through which the lubricating oil is capable of passing. The lubricating oil enters the gap 301, the seal ring 1 thereby receives a pressure to the outer periphery side, and its outer peripheral surface 1B is pressed onto the inner peripheral surface of the through hole 102. Accordingly, the outer peripheral surface 1B of the seal ring 1 approximates a perfect-circular column shape, and a gap between the outer peripheral surface 1B and the inner peripheral surface of the through hole 102 becomes small.

Further, because an axis-line-x-direction dimension of the seal ring 1 is smaller than an axis-line-x-direction dimension of the peripheral groove 201 and the lubricating oil space S1 has a higher pressure than the external space S2, a gap 302 through which the lubricating oil is capable of passing is formed between the end surface 1C on the lubricating oil space S1 side and an inner surface 203 of the peripheral groove 201, the inner surface 203 being opposed to the end surface 1C, and the end surface 1D on the external space S2 side is tightly fitted on an inner surface 204 of the peripheral groove 201, the inner surface 204 being opposed to the end surface 1D. The lubricating oil enters the gap 302, and the seal ring 1 thereby receives a pressure to the external space S2 side and is pressed onto the inner surface 204.

Each of the inner peripheral surface 1A and the outer peripheral surface 1B of the seal ring 1 is circular when seen in the axis line x direction, but centers of those circles are deviated from each other. That is, the center of the inner peripheral surface 1A is deviated to the cut portion 2 side in the radial direction with respect to the center of the outer peripheral surface 1B. Accordingly, the radial-direction dimension of the seal ring 1 gradually decreases as the seal ring 1 extends from an intermediate portion (a central portion of the long-length circular-arc portion 3) 4 which is positioned on an opposite side to the cut portion 2 in the radial direction toward the cut portion **2.** That is, the seal ring 1 has the pair of decreasing portions 5 and 6 whose radial-direction dimensions decrease, and in the present embodiment, the whole seal ring 1 is provided as the pair of decreasing portions 5 and 6. Further, it is sufficient that the radial-direction dimension of the seal ring 1 at the cut portion 2 (that is, a minimum dimension) is approximately 0.5 to 0.8 times the radial-direction dimension of the seal ring 1 at the intermediate portion 4 (that is, a maximum dimension), for example. Note that a partial range of the annular seal ring 1 may become the decreasing portions, and the other range may become an equal thickness portion in which the radial-direction dimension is constant. For example, a central angle of each of the pair of decreasing portions may be set to 60° to 120°, and the remaining angle of 120° to 60° may be set as the equal thickness portion.

The end surfaces 1C and 1D on both sides in the axis line x direction in the seal ring 1 have similar (that is, symmetrical) shapes to each other, and hereinafter, a description will be made about a shape of the end surface 1D. That is, in the end surface 1C, recessed parts similar to the recessed parts 7 in the end surface 1D, which will be described later, are formed. As illustrated in Figs. 3 and 4, the end surface 1D has the plurality of recessed parts 7 and has a flat portion 8 between two neighboring recessed parts 7. That is, the flat portion 8 is a portion in which the recessed part 7 is not formed and extends along a flat plane perpendicular to the axis line x.

The recessed part 7 has a pair of boundary portions 71 between the recessed part 7 and the flat portion 8, a bottom portion 72 which is positioned at a center of the recessed part 7 in a circumferential direction around the axis line x, and an inclination portion 73 which is inclined such that a groove depth (a height difference in an X direction between the flat portion 8 and each portion of the recessed part 7) gradually becomes deeper from the boundary portion 71 toward the bottom portion 72. The boundary portion 71 extends along the radial direction. In the present embodiment, a step is formed between the inclination portion 73 and the bottom portion 72, but those may smoothly be connected together. Similarly to the flat portion 8, the bottom portion 72 extends along a flat plane perpendicular to the axis line x. The inclination portion 73 is inclined in a direction to gradually become deeper (further away from the inner surface 204) as the inclination portion 73 extends from the boundary portion 71 to approach the bottom portion 72 in the circumferential direction.

The plurality of recessed parts 7 include the second recessed part 7B illustrated in Fig. 3 and the first recessed part 7A illustrated in Fig. 4. It is sufficient that a range in which the first recessed parts 7A are formed includes 60° to 120° on each of both sides of the cut portion 2, for example, and the remaining recessed parts 7 are the second recessed parts 7B. Further, in a case where the decreasing portions are formed only in a part of the seal ring 1, the range in which the first recessed parts are provided may be the same as a range in which the decreasing portions are formed or may be a part of the decreasing portions on the cur portion side. As for the second recessed part 7B, an outer periphery side wall part 9A is provided on the outer periphery side, the second recessed part 7B is thereby demarcated from the outer peripheral surface 1B, and on the inner periphery side, an inner periphery side wall part 9B is provided. The inner periphery side wall part 9B demarcates the second recessed part 7B from the inner peripheral surface 1A in the inclination portion 73, and a notch-shaped communication portion 91 is formed such that the inner peripheral surface 1A communicates with the bottom portion 72. Accordingly, the lubricating oil positioned at the inner peripheral surface 1A passes through the communication portion 91 and enters an inside of the second recessed part 7B, and an oil film is formed between the end surface 1D and the inner surface 204 of the shaft portion 200.

In such a manner, the outer periphery side wall part 9A and the inner periphery side wall part 9B are provided with respect to the second recessed part 7B, and the lubricating oil is thereby less likely to flow out from the second recessed part 7B. Further, the outer periphery side wall part 9A and the inner periphery side wall part 9B are provided, and around the second recessed part 7B, an area in which the end surface 1D contacts the inner surface 204 can thereby be secured. Accordingly, it is easy to secure stability in a case where the end surface 1D is caused to contact the inner surface 204.

Particularly by the outer periphery side wall part 9A of the outer periphery side wall part 9A and the inner periphery side wall part 9B, the lubricating oil is less likely to flow out from the second recessed part 7B as described above. In this case, sealability between the lubricating oil space S1 and the external space S2 is secured unless the lubricating oil passes through the outer periphery side wall part 9A, and in order to achieve this, the outer periphery side wall part 9A has to have a certain or greater thickness (radial-direction dimension). In other words, even in a case where the inner periphery side wall part 9B is not provided, when the outer periphery side wall part 9A with a certain or greater thickness is provided, sealability can be secured.

On the other hand, as for the first recessed part 7A, the outer periphery side wall part 9A is provided on the outer periphery side, but the inner periphery side wall part 9B is not provided. That is, the whole first recessed part 7A (that is, the bottom portion 72 and the inclination portion 73) is continuous (communicates) with an inner peripheral surface 21. Here, "being continuous" means that no wall is present between two sections, that is, a corner portion is formed with those two surfaces (in the present embodiment, corner portions are formed between the bottom portion 72 and the inner peripheral surface 1A and between the inclination portion 73 and the inner peripheral surface 1A). In such a manner, the whole first recessed part 7A communicates with the inner peripheral surface 1A, and the enlarged communication portion 74 is thereby formed between the inner peripheral surface 1A of the seal ring 1 and the first recessed part 7A. The circumferential-direction dimension of the enlarged communication portion 74 is larger than that of the communication portion 91 in the circumferential direction.

The whole first recessed part 7A is continuous (communicates) with the inner peripheral surface **21,** and a radial-direction dimension of the first recessed part 7A thereby becomes a size resulting from subtraction of a radial-direction dimension of the outer periphery side wall part 9A from a radial-direction dimension of the end surface 1D. Meanwhile, a radial-direction dimension of the second recessed part 7B becomes a size resulting from subtraction of both of radial-direction dimensions of the outer periphery side wall part 9A and the inner periphery side wall part 9B from the radial-direction dimension of the end surface 1D.

A part of the recessed parts 7 arranged in the decreasing portions 5 and 6 are provided as the first recessed parts 7A. Because the decreasing portions 5 and 6 are formed, the radial-direction dimension of the seal ring 1 becomes smallest in the vicinity of the cut portion 2 and becomes largest at the intermediate portion 4. In this case, in the first recessed part 7A in which the inner periphery side wall part 9B is not provided, the radial-direction dimension becomes large compared to a case where the inner periphery side wall part 9B is provided. It is sufficient that the range in which the first recessed parts 7A are provided includes 60° to 120° on each of both sides of the cut portion 2 as described above, for example, and is appropriately set such that differences among radial-direction dimensions of the plurality of recessed parts 7 become small.

Here, as illustrated in Fig. 7, in the inner peripheral surface 1A of the seal ring 1, a protrusion portion 11 is formed which protrudes on the inner periphery side. The protrusion portion 11 has a rectangular cross section, and a distal end portion on the inner periphery side has a flat shape. Further, a base end portion of the protrusion portion 11 has a tapered shape so as to smoothly rise from the inner peripheral surface 1A. Half a difference between the axis-line-x-direction dimension of the whole seal ring 1 and an axis-line-x-direction dimension of the protrusion portion 11 is larger than a depth of the recessed part 7. That is, the protrusion portion 11 protrudes from a deeper position than the bottom portion 72.

In such a manner, in the seal ring 1 according to the embodiment of the present invention, the circumferential-direction dimension of the enlarged communication portion 74 of the first recessed part 7A arranged in each of the decreasing portions 5 and 6 is larger than the circumferential-direction dimension of the communication portion 91 of the second recessed part 7B, and the radial-direction dimension of the first recessed part 7A can thereby be secured. Accordingly, in a configuration in which sealing performance is improved by forming the decreasing portions 5 and 6, even in a region in which the radial-direction dimension of the seal ring 1 becomes small, the area of the oil film to be formed by the recessed parts 7 is secured, a dynamic pressure action is thereby easily caused, an oil film layer is thereby formed between the inner surface 204 of the peripheral groove 201 and the end surface 1D, sliding resistance is thereby decreased, and torque can be reduced. That is, the torque can be reduced while the sealing performance is improved.

Further, the enlarged communication portion 74 causes the whole first recessed part 7A (that is, the bottom portion 72 and the inclination portion 73) to communicate with the inner peripheral surface 1A, the inner periphery side wall part 9B thereby does not have to be provided with respect to the first recessed part 7A, and the torque can be reduced while the configuration is simplified.

Further, the seal ring 1 has the plurality of recessed parts in both of the end surfaces 1C and 1D in the axis line x direction, and the recessed parts are thereby arranged in the surface on which the oil film is formed even in a case where the seal ring 1 is mounted on the shaft portion 200 in either direction (such that either one of the end surfaces 1C and 1D is opposed to the inner surface 204). That is, in assembly, a worker does not have to check the direction of the seal ring 1 for preventing incorrect assembly, and even when the seal ring 1 is incorporated in either direction, the torque can be reduced by causing the dynamic pressure action as described above.

Note that the present invention is not limited to the above embodiment and includes other configurations and so forth which can accomplish an object of the present invention, and variants and so forth described hereinafter are included in the present invention. For example, in the above embodiment, the recessed part 7 has the bottom portion 72 and the pair of inclination portions 73, but a shape of the recessed part is not limited to this.

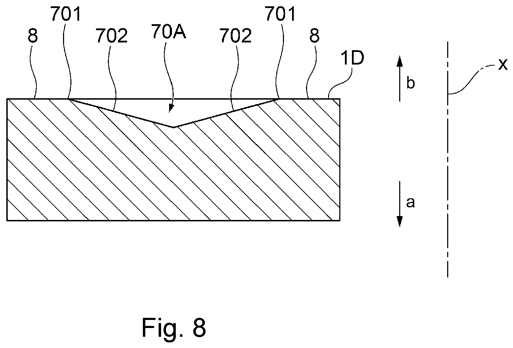

For example, as illustrated as a variant 1 in Fig. 8, a configuration is possible in which a recessed part 70A has a pair of boundary portions 701 as boundaries to the flat portion 8 and a pair of inclination portions 702 in which a groove depth becomes deeper as the inclination portions 702 approach each other from the pair of boundary portions 701, and the pair of inclination portions 702 are directly connected together. That is, a configuration is possible in which a flat (with a constant depth) bottom portion is not formed between the pair of inclination portions 702. The inclination portion 702 is formed in a flat surface shape.

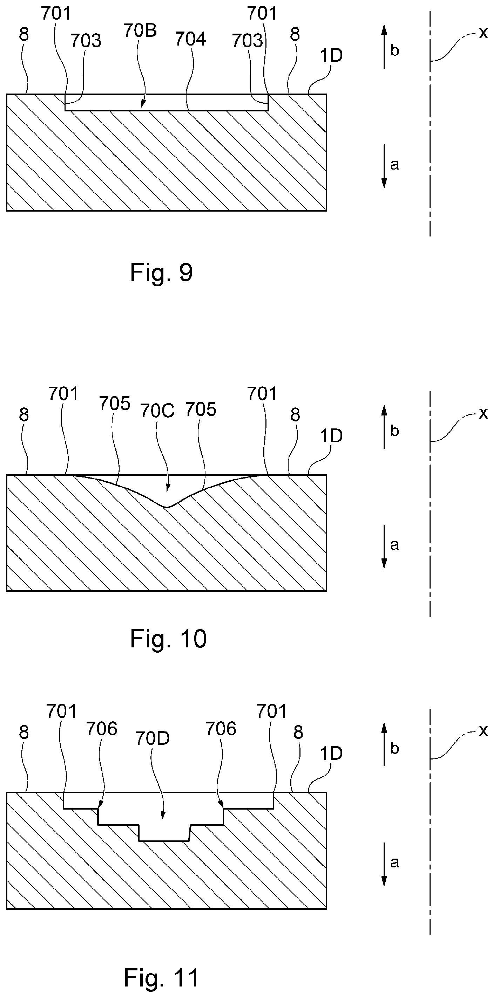

Further, as illustrated as a variant 2 in Fig. 9, a configuration is possible in which a recessed part 70B has a pair of boundary portions 701 as boundaries to the flat portion 8, a pair of perpendicular portions 703 which extend from the boundary portions 701 along the axis line x direction, and a bottom portion 704 which connects together deepest portions in the perpendicular portions 703. That is, the configuration does not have to be a configuration which gradually becomes deeper from boundary portions toward a circumferential-direction central portion of a recessed part.

Further, as illustrated as a variant 3 in Fig. 10, a configuration is possible in which a recessed part 70C has a pair of boundary portions 701 as boundaries to the flat portion 8 and a pair of inclination portions 705 in which a groove depth becomes deeper as the inclination portions 705 approach each other from the pair of boundary portions 701, and the pair of inclination portions 705 are directly connected together. That is, a configuration is possible in which a flat (with a constant depth) bottom portion is not formed between the pair of inclination portions 705. The variant 3 is different from the variant 1, and the inclination portion 705 has a curved surface which is convex to the other side in the axis line x direction. That is, a change rate of the groove depth becomes higher as the inclination portion 705 approaches a circumferential-direction central portion of the recessed part 70C.

Further, as illustrated as a variant 4 in Fig. 11, a configuration is possible in which a recessed part 70D has a pair of boundary portions 701 as boundaries to the flat portion 8 and a pair of step-shaped portions 706 in which a groove depth stepwise becomes deeper from the boundary portions 701. In an example illustrated in Fig. 11, the step-shaped portion 706 has three steps (three portions are provided which extend along the axis line x direction), but the number of steps is not particularly limited, and two or more steps are sufficient.

In a form in which the inclination portion is connected with the boundary portion as in the above embodiment and the variants 1 and 3, an angle formed between the inclination portion and the inner surface 204 of the shaft portion 200 can be set small in the boundary portion, and it is easy to obtain the dynamic pressure action. Further, in a case where the inclination portion is formed as a convex curved surface as in the variant 3, even when some abrasion occurs in the seal ring, a change in the above formed angle is small, and it is easy to maintain the dynamic pressure action. Meanwhile, in a configuration in which a portion extending along an axis line direction is connected with the boundary portion as in the variants 2 and 4, even when abrasion occurs in the seal ring, a change in a dimension of the recessed part is small, and it is thus easy to obtain a stable dynamic pressure action.

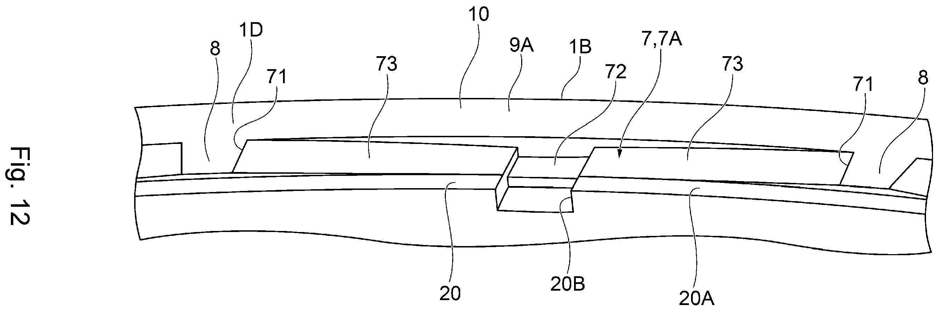

Further, as illustrated as a variant 5 in Fig. 12, a configuration is possible in which in addition to an outer side ring-shaped portion 10 in which the recessed part 7 is formed, the seal ring 1 has an inner side ring-shaped portion 20 which is arranged on the inner periphery side of the outer side ring-shaped portion 10. The inner side ring-shaped portion 20 has an end surface 20A which is retracted relatively to the flat portion 8 (spaced apart from the inner surface 204) and a notch portion 20B communicating with the bottom portion 72.

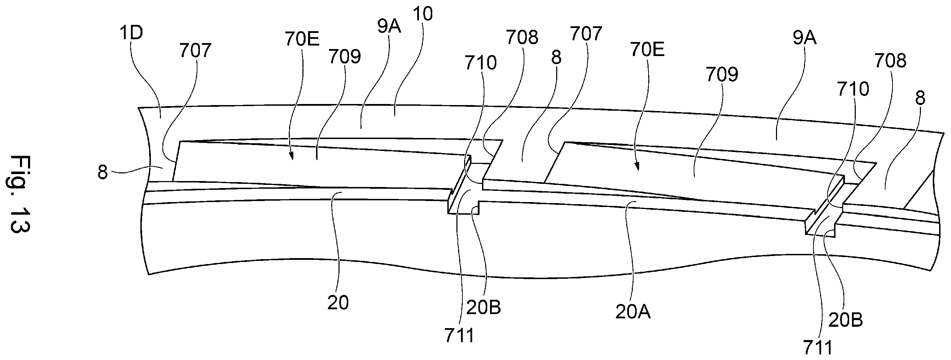

Further, as illustrated as a variant 6 in Fig. 13, a configuration is possible in which a recessed part 70E has a pair of boundary portions 707 and 708 as boundaries to the flat portion 8, an inclination portion 709 in which a groove depth gradually becomes deeper from the one boundary portion 707 toward the other boundary portion 708, a perpendicular portion 710 which extends from the other boundary portion 708 in the axis line x direction, and a bottom portion 711 which is formed between the inclination portion 709 and the perpendicular portion 710. Note that in an example illustrated in Fig. 13, similarly to the variant 5, the outer side ring-shaped portion 10 and the inner side ring-shaped portion 20 are formed, but the inner side ring-shaped portion 20 does not have to be formed. Further, in the variants 1 to 4, the outer side ring-shaped portion 10 and the inner side ring-shaped portion 20 may be formed.

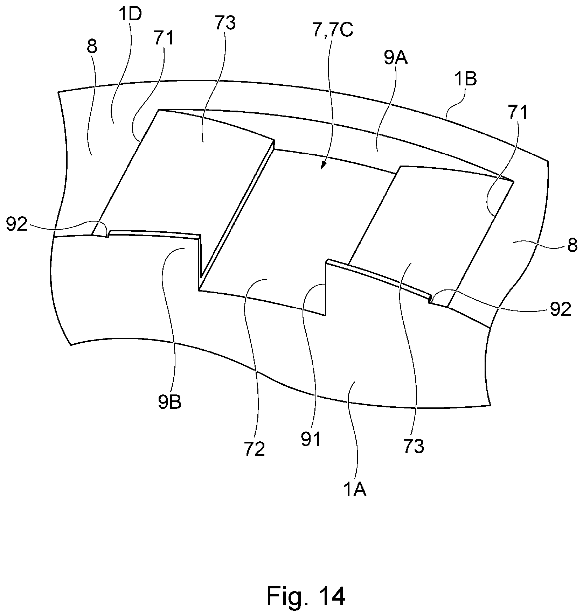

Further, in the above embodiment, the inner periphery side wall part 9B is not provided in the first recessed part 7A, but as illustrated as a variant 7 in Fig. 14, a first recessed part 7C may be provided in which the inner periphery side wall part 9B is provided. In the first recessed part 7C illustrated in Fig. 14, a notch portion 92 is formed in a portion, which includes the boundary portion 71, in the inner periphery side wall part 9B. Accordingly, the first recessed part 7C is continuous with the inner peripheral surface 1A in the boundary portion 71. That is, the communication portion 91 and the notch portion 92 form the enlarged communication portion, and a total circumferential-direction dimension of those is larger than the circumferential-direction dimension of the communication portion 91. Note that in a case where the inner periphery side wall part is provided in the first recessed part and the notch portion is formed in the inner periphery side wall part, a position of the notch portion is not limited to a position including the boundary portion.

Further, in the above embodiment, the seal ring 1 has the plurality of recessed parts in both of the end surfaces 1C and 1D in the axis line x direction, but the recessed parts may be formed only in one end surface, and it is sufficient that the seal ring is mounted such that the end surface in which the recessed parts are formed becomes a side on which the oil film is formed.

Further, in the above embodiment, in the sealing structure 300 configured between the housing 100 as the outer periphery side member, which is fixed, and the shaft portion 200 as the inner periphery side member, which rotates, the seal ring 1 is provided in the peripheral groove 201 of the shaft portion 200, and the seal ring 1 slidably contacts the shaft portion 200, but the seal ring may be employed for another structure. That is, the seal ring may be provided in a configuration in which the inner periphery side member is fixed and the outer periphery side member rotates or a configuration in which both of the inner periphery side member and the outer periphery side member rotate. Further, a groove is formed in an inner peripheral surface of the outer periphery side member, and the seal ring may be arranged in this groove. Further, the seal ring may follow either one (that is, slidably contact either one) of the outer periphery side member and the inner periphery side member and may follow either one (that is, slidably contact either one) of a rotating member or a fixed member. Further, it is sufficient that in accordance with arrangement of the seal ring, which of the inner peripheral surface and the outer peripheral surface of the seal ring the recessed part becomes continuous with is selected.

In the foregoing, the embodiments of the present invention have been described. However, the present invention is not limited to the seal ring according to the above-described embodiments of the present invention and includes all forms which are included in the concepts and the claims of the present invention. Further, configurations may appropriately selectively be combined such that at least a part of the above-described objects and effects are exhibited. For example, shapes, materials, arrangement, sizes, and so forth of the configuration elements in the above-described embodiments can appropriately be changed in accordance with specific usage forms of the present invention.

### Reference Signs List

1 seal ring
1A inner peripheral surface
1B outer peripheral surface
1C, 1D end surface
11 protrusion portion
2 cut portion
3 circular-arc portion
31, 32 both end portions
4 intermediate portion
**5,** 6 decreasing portion
7, 70B to 70Erecessed part
7A, 7C first recessed part
7B second recessed part
71, 701, 707, 708 boundary portion
72, 704, 711 bottom portion
73, 702, 705, 709 inclination portion
74 enlarged communication portion
8 flat portion
9A outer periphery side wall part
9B inner periphery side wall part
91 communication portion
92 notch portion
703, 710 perpendicular portion
706 step-shaped portion
10 outer side ring-shaped portion
20 inner side ring-shaped portion
20A end surface
20B notch portion
100 housing
101 wall part
102 through hole
200 shaft portion
201 peripheral groove
202 bottom surface
203, 204 inner surface
300 sealing structure
301, 302 gap
S1 lubricating oil space
S2 external space

## Claims

1. A seal ring having an annular shape and having one cut portion, the seal ring comprising:
a pair of decreasing portions in which a radial-direction dimension of the seal ring decreases as the seal ring approaches the cut portion; and
a plurality of recessed parts which are formed in at least one of surfaces directed in an axis line direction, wherein
the plurality of recessed parts are configured with a first recessed part arranged in a range included in the decreasing portions and a second recessed part arranged in a range spaced apart from the cut portion with respect to the first recessed part,
between an inner peripheral surface or an outer peripheral surface of the seal ring and the second recessed part, a wall part, which demarcates both of the inner peripheral surface or the outer peripheral surface and the second recessed part, and a communication portion, which causes both of the inner peripheral surface or the outer peripheral surface and the second recessed part to communicate with each other, are formed,
between the inner peripheral surface or the outer peripheral surface of the seal ring and the first recessed part, an enlarged communication portion is formed which causes both of the inner peripheral surface or the outer peripheral surface and the first recessed part to communicate with each other,
the enlarged communication portion is formed with one or a plurality of portions, and a total circumferential-direction dimension of the enlarged communication portion is greater than a circumferential-direction dimension of the communication portion.

2. The seal ring according to claim **1,** wherein
the enlarged communication portion causes the whole first recessed part to communicate with the inner peripheral surface or the outer peripheral surface.

3. The seal ring according to claim 1 or **2,** wherein
the plurality of recessed parts are formed in both surfaces, which are directed in the axis line direction, in the seal ring.
